Europäisches Patentamt

European Patent Office

Office européen des brevets

(19)

(11) EP 1 193 687 A2

(12) **EUROPÄISCHE PATENTANMELDUNG**

| | |
|---|---|
| (43) Veröffentlichungstag:<br>03.04.2002 Patentblatt 2002/14 | (51) Int Cl.⁷: $G10L\ 15/06$ |

(21) Anmeldenummer: **01122684.2**

(22) Anmeldetag: **25.09.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **27.09.2000 DE 10047718**

(71) Anmelder:
• **Philips Corporate Intellectual Property GmbH 52064 Aachen (DE)**
Benannte Vertragsstaaten:
**DE**
• **Koninklijke Philips Electronics N.V. 5621 BA Eindhoven (NL)**
Benannte Vertragsstaaten:
**FR GB**

(72) Erfinder: **Botterweck, Henrik, Dr.
Habsburgerallee 11, 52064 Aachen (DE)**

(74) Vertreter: **Volmer, Georg, Dipl.-Ing.
Philips Corporate Intellectual Property GmbH,
Habsburgerallee 11
52064 Aachen (DE)**

(54) **Sprecheradaption für die Spracherkennung**

(57) Beschrieben wird ein Verfahren zur Spracherkennung, bei dem ein Ausgangs-Modell-Set anhand bereits beobachteter Sprachdaten eines aktuellen Sprechers an diesen Sprecher angepasst wird. Das Ausgangs-Modell-Set umfasst dabei Modelle für verschiedene akustische Einheiten. Die Modelle werden jeweils durch eine Mehrzahl von Modellparametern beschrieben. Das Ausgangs-Modell-Set wird dabei durch einen Supervektor in einem hochdimensionalen Vektorraum (Modellraum) repräsentiert, wobei der Supervektor durch Verkettung der Mehrzahl der Modellparameter der Modelle des Ausgangs-Modell-Sets gebildet wird. Die Anpassung dieses Ausgangs-Modell-Set an den Sprecher erfolgt in dem Modellraum mittels eines MAP-Verfahrens, bei dem als a priori-Verteilung für das MAP-Verfahren eine asymmetrische Verteilung im Modellraum gewählt wird.

FIG. 1

**Beschreibung**

Die Erfindung betrifft ein Verfahren zur Spracherkennung, bei dem ein Ausgangs-Modell-Set anhand bereits beobachteter Sprachdaten eines aktuellen Sprechers an diesen Sprecher angepasst wird. Das Modell-Set umfasst jeweils Modelle für verschiedene akustische Einheiten, wobei die Modelle durch eine Mehrzahl von Modellparametern beschrieben werden.

Spracherkennungssysteme arbeiten in der Regel in der Weise, dass zunächst das Sprachsignal in einer Merkmalsanalyseeinheit spektral oder zeitlich analysiert wird. In dieser Merkmalsanalyseeinheit werden die Sprachsignale üblicherweise in Abschnitte, sogenannte "Fenster" (Frames), aufgeteilt. Diese Fenster werden dann für die weitere Analyse in geeigneter Form codiert und digitalisiert. Ein beobachtetes Signal kann dabei durch mehrere verschiedene Merkmale bzw. in einem mehrdimensionalen Merkmalsraum durch einen "Beobachtungsvektor" oder "Merkmalsvektor" beschrieben werden. Die eigentliche Spracherkennung, d.h. die Erkennung des Bedeutungsinhalts des Sprachsignals, erfolgt schließlich dadurch, dass die durch die Beobachtungsvektoren beschriebenen Abschnitte des Sprachsignals bzw. eine ganze Sequenz von Beobachtungsvektoren mit Modellen von verschiedenen, sinnvoll möglichen Sequenzen von Beobachtungen verglichen werden und somit ein Modell herausgesucht wird, welches am besten zu dem aufgetretenen Beobachtungsvektor bzw. der Sequenz passt. Das Spracherkennungssystem muss hierzu eine Art Bibliothek von allen möglichen Signalfolgen aufweisen, aus denen das Spracherkennungssystem dann die jeweils passende Signalfolge auswählen kann. D.h. das Spracherkennungssystem verfügt über ein Set von akustischen Modellen für verschiedene akustische Einheiten, die im Prinzip sinnvollerweise bei einem Sprachsignal vorkommen könnten. Bei den akustischen Einheiten kann es sich beispielsweise um Phoneme oder phonemartige Einheiten wie Diphone oder Triphone handeln, bei denen jeweils das Modell des Phonems vom vorhergehenden und/oder nachfolgenden Phonem innerhalb eines Kontexts abhängt. Selbstverständlich kann es sich bei den akustischen Einheiten auch um ganze Wörter handeln. Dementsprechend kann ein solches Modell-Set nur aus Modellen von Phonemen, von Diphonen, Triphonen oder Ähnlichem, von Wörtern oder einer Mischung von verschiedenen akustischen Einheiten bestehen.

Eine häufig verwendete Methode, akustische Einheiten, d.h. bestimmte Folgen von Beobachtungsvektoren, zu beschreiben, ist die Verwendung sogenannter "Hidden-Markow-Modelle" (HM-Modelle). Es handelt sich hierbei um stochastische Signalmodelle, bei denen davon ausgegangen wird, dass einer Signalfolge eine sogenannte "Markow-Kette" von verschiedenen Zuständen zugrunde liegt, wobei zwischen den einzelnen Zuständen bestimmte Übergangswahrscheinlichkeiten bestehen.

Die jeweiligen Zustände selbst sind dabei nicht erkennbar ("Hidden"), und das Auftreten der tatsächlichen Beobachtungen in den einzelnen Zuständen wird durch eine Wahrscheinlichkeitsdichte in Abhängigkeit vom jeweiligen Zustand beschrieben. Ein Modell für eine bestimmte Sequenz von Beobachtungen kann daher in diesem Konzept im Wesentlichen durch die Folge der verschiedenen durchlaufenen Zustände, durch die Dauer des Aufenthalts in den jeweiligen Zuständen, die Übergangswahrscheinlichkeit zwischen den Zuständen sowie die Wahrscheinlichkeit des Auftretens der unterschiedlichen Beobachtungen in den jeweiligen Zuständen beschrieben werden. Ein Modell für ein bestimmtes Phonem wird dabei so erzeugt, dass zunächst geeignete Anfangsparameter für ein Modell verwendet werden und dann in einem sogenannten "Training" dieses Modell durch Veränderung der Parameter so an das zu modellierende Phonem der jeweiligen Sprache angepasst wird, bis ein optimales Modell gefunden ist. Die Details über die verschiedenen HM-Modelle sowie die einzelnen anzupassenden genauen Parameter spielen für die vorliegende Erfindung keine wesentliche Rolle und werden daher nur insoweit später noch weiter beschrieben, als sie für das Verständnis der Erfindung notwendig sind.

Modelle können entweder sprecherabhängig (sogenannte SD-Modelle, Speaker Dependent) oder sprecherunabhängig (sogenannte SI-Modelle, Speaker Independent) sein. Sprecherabhängige Modelle sind genau auf einen individuellen Sprecher trainiert, indem dem Spracherkennungssystem zuvor eine große Anzahl von Wortbeispielen des individuellen Sprechers gegeben wird, wobei der Inhalt dieser Wortbeispiele dem System bekannt ist. Diese Beispiele werden Trainingsdaten genannt. Derartige sprecherabhängige Systeme bzw. Modelle sind relativ exakt für das jeweilige Individuum, für das sie trainiert worden sind. Sie sind aber äußerst unexakt für jede andere Person. Bei einem sprecherunabhängigen System erfolgt dagegen das Training der Modelle anhand von Trainingsdaten von möglichst vielen verschiedenen Sprechern, um so Modelle zu erzeugen, mit denen das System in der Lage ist, jede Person, die die jeweilige Sprache spricht, zu verstehen. Die Fehlerrate in einem solchen sprecherunabhängigen System ist jedoch bei der Erkennung von Sprachdaten eines Sprechers, der nicht zu den Trainingssprechern gehört, etwa 20 bis 25 Prozent höher als die Fehlerrate bei einem vergleichbaren sprecherabhängigen System, das speziell für diesen Sprecher trainiert wurde.

In vielen Anwendungen von Spracherkennungssystemen, beispielsweise bei einer Verwendung in automatischen Telefon-Beantwortungssystemen, besteht leider nicht die Möglichkeit, das System bzw. die Modelle zuvor auf einen bestimmten Sprecher zu trainieren. Um die Performance solcher Systeme zu verbessern, beinhalten viele Spracherkennungssystem inzwischen die Möglichkeit, das System während der Spracherkennung an den Sprecher anhand der bereits beobachteten Sprachdaten anzupassen. Eine einfache Möglichkeit hierzu besteht darin, die vom aktuellen Sprecher stammenden, zu erkennenden Beobachtungen so zu transformieren, dass sie näher an den Beobachtungen eines Referenzsprechers liegen, für den ein sprecherabhängiges Modell trainiert wurde. Eine weitere Möglichkeit besteht darin, die Trainingssprecher entsprechend ihrer Ähnlichkeit zueinander zu gruppieren und für jede Gruppe von ähnlichen Sprechern ein gemeinsames Modell zu trainieren. Es wird dann für den jeweiligen aktuellen Sprecher das Modell der Gruppe gewählt, in die der Sprecher am besten hineinpasst.

Eine weitere, besonders gute und effektive Methode ist die Anpassung eines Ausgangs-Modells an den jeweiligen Sprecher, d.h. es werden verschiedene Parameter so verändert, dass das veränderte Modell besser zu dem jeweiligen Sprecher passt. Bei dieser Methode wird während der Spracherkennung ein sprecherabhängiges Modell gebildet. Die beiden bekanntesten Modelladaptionstechniken sind die sogenannte Maximum-A-Posteriori-Abschätzung (MAP) und das Maximum-Likelihood-Linear-Regression-Verfahren (MLLR).

Beim üblichen MLLR-Verfahren wird ein Modell gesucht, das mit größter Wahrscheinlichkeit die bisher aufgetretenen Beobachtungen erzeugt hat. Diese Methode ist relativ schnell. Sie hat jedoch den Nachteil, dass nur die Wahrscheinlichkeit der Beobachtung maximiert wird. Wahrscheinlichkeiten für bisher nicht aufgetretene Beobachtungen, d.h. bisher noch nicht beobachtete Phoneme, werden nicht berücksichtigt. Korrelationen zwischen verschiedenen Phonemen werden nur grob durch die gemeinsame Transformation von mehreren Modellen berücksichtigt.

Das sogenannte MAP-Verfahren ist insofern eine bessere Adaptionsstrategie, da hier die aufgetretenen Beobachtungen unter Berücksichtigung der Kenntnis der Wahrscheinlichkeitsverteilung der Modellparameter optimiert werden. Alle Mittelwerte der Wahrscheinlichkeitsdichten der verschiedenen Zustände bewegen sich von ihrer Position im Ausgangsmodell in Richtung des beobachteten Mittelwerts in Abhängigkeit von der Anzahl der bisherigen Beobachtungen. Auch dieses Verfahren hat jedoch den Nachteil, dass Korrelationen zwischen verschiedenen Phonemen nicht berücksichtigt werden. Nicht beobachtete Dichten werden überhaupt nicht transformiert. Die a priori-Verteilung aller Dichtemittelwerte ist ein Produkt von unabhängigen Verteilungen für die einzelnen Dichten. Dementsprechend führt beispielsweise ein besonders niedrig gesprochenes Phonem [*a*] nicht automatisch auch zu einer Reduzierung des Modells für das Phonem [*o*]. Um zu einem möglichst guten Ergebnis zu kommen, werden daher beim MAP-Verfahren sowohl erhebliche Rechenleistung als auch Zeit und vor allem eine ausreichende Menge von Sprachsignalen des neuen Sprechers mit möglichst vielen verschiedenen Phonemen benötigt.

Es ist Aufgabe der vorliegenden Erfindung, eine Alternative zu dem bekannten Stand der Technik zu schaffen, die eine möglichst schnelle, aber trotzdem optimale Anpassung des Ausgangs-Modell-Sets an den jeweiligen Sprecher auch bei nur wenig beobachteten Sprachdaten ermöglicht.

Diese Aufgabe wird durch ein Verfahren gemäß Patentanspruch 1 gelöst. Die abhängigen Ansprüche enthalten besonders vorteilhafte Weiterbildungen und Ausgestaltungen des erfindungsgemäßen Verfahrens.

Bei dem erfindungsgemäßen Verfahren wird das Ausgangs-Modell-Set durch einen Supervektor in einem hochdimensionalen Vektorraum, im Folgenden Modellraum genannt, repräsentiert. Dieser Supervektor wird zuvor durch Verkettung der Mehrzahl der Modellparameter der Modelle des Ausgangs-Modell-Sets gebildet. Um dieses Ausgangs-Modell-Set dann in dem Modellraum anzupassen, wird ein MAP-Verfahren verwendet, wobei als a priori-Verteilung für das MAP-Verfahren eine asymmetrische Verteilung im Modellraum gewählt wird.

In dem üblichen MAP-Verfahren ist die a priori-Verteilung eine Gauß-Verteilung, deren Varianz, der sogenannte MAP-"$\alpha$"-Parameter, global festgelegt ist, was zu einer sphärischsymmetrischen Gauß-Verteilung in dem hochdimensionalen Modellraum führt. Anstelle dieser üblichen symmetrischen Gauß-Verteilung wird hier erfindungsgemäß eine asymmetrische Verteilung, vorzugsweise eine Gauß-Verteilung, verwendet, die in unterschiedlichen Richtungen unterschiedliche Varianzen, d.h. Breiten, aufweist. Dadurch ist es möglich, der Verteilung bestimmte Vorzugsrichtungen im Modellraum zu geben, in die beispielsweise das a priori-Wissen der Variabilität unterschiedlicher Sprecher eingeht. Hierzu werden vorzugsweise diese Vorzugsrichtungen als Hauptachsen der Verteilung mit einer großen Varianz angenommen, wogegen alle Richtungen senkrecht zu diesen Hauptachsen eine vordefinierte kleine oder sogar verschwindende Varianz haben. Bei der Anpassung des Ausgangsmodells an den jeweiligen Sprecher erfolgt diese dann relativ schnell in Richtung der Vorzugsrichtung oder langsam oder gar nicht in jede beliebige andere Richtung.

Die Vorzugsrichtungen sind vorzugsweise so gewählt, dass sie die Hauptrichtung innerhalb des Modellraums repräsentieren, entlang der sich unterschiedliche Sprecher voneinander unterscheiden lassen.

Eine Möglichkeit, solche Vorzugsrichtungen zu ermitteln, ist die Bildung eines Eigenraums auf Basis von Trainingssprachdaten einer Mehrzahl von Trainingssprechern. Die Vorzugsrichtungen werden dann so gewählt, dass sie entlang von bestimmten Basisvektoren des Eigenraums verlaufen.

Die Bildung eines solchen Eigenraums bzw. die sogenannte "Eigenvoice-Methode" wird in der EP 0 984 429 A2 dargestellt. Startpunkt der dort beschriebenen Eigenvoice-Methode ist die Darstellung von Sprechern und ihrer kombinierten akustischen Modelle, d.h. ihrer Modell-Sets, als Elemente des Modellraums. Auch hier werden also alle Parameter, die einen Sprecher beschreiben, zu einem "Supervektor" verkettet, der einen Punkt im Modellraum definiert. Auf diesen Supervektoren der Trainingssprecher wird dann eine lineare Transformation durchgeführt, durch die die Eigenraum-Basisvektoren für den sogenannten Eigenraum gewonnen werden. Bei diesem Eigenraum handelt es sich um einen linearen Unterraum des hochdimensionalen Modellraums. Die Transformation wird dabei in der Weise durchgeführt, dass die Eigenraum-Basisvektoren verschiedene Korrelations- oder Diskriminierungsmerkmale zwischen den verschiedenen Trainingssprechern bzw. den Modellen der Trainingssprecher repräsentieren. Eine dort genannte Möglichkeit der Transformation ist beispielsweise die "Principal Component Analysis" (PCA), bei der mittels der Supervektoren der verschiedenen Sprecher eine Korrelationsmatrix gebildet wird und als Eigenraum-Basisvektoren die Eigenvektoren dieser Korrelationsmatrix ermittelt werden. Weitere mögliche Methoden sind die "Linear Discriminant Analysis" (LDA), die "Factor Analysis" (FA), die "Independent Component Analysis" (ICA) oder die "Singular Value Decomposition" (SVD). Die verschiedenen Transformationen nutzen jeweils ein Reduktionskriterium, das auf der Variabilität, beispielsweise der Varianz, der zu transformierenden Vektoren basiert. Jeder der so geschaffenen Eigenraum-Basisvektoren repräsentiert eine unterschiedliche Dimension, in der einzelne Sprecher voneinander unterschieden werden können. Außerdem kann jeder Supervektor jedes Sprechers aus dem ursprünglichen Trainingsmaterial durch eine Linearkombination dieser Basisvektoren beschrieben werden.

Die verschiedenen Eigenraum-Basisvektoren werden vorzugsweise nach ihrer Wichtigkeit für die Unterscheidung verschiedener Sprecher geordnet. Dadurch besteht die Möglichkeit, für die Verwendung im Spracherkennungssystem den Eigenraum noch weiter zu reduzieren, indem die unwichtigsten Basisvektoren des Eigenraums, die nur wenig Informationen enthalten, mit denen Sprecher unterschieden werden können, verworfen werden. Die Dimension des letztlich in einer Spracherkennung genutzten Eigenraums kann dabei erheblich geringer sein als die Anzahl der Trainingssprecher. Es reichen somit wenige Koordinaten aus, um die einzelnen sprecherabhängigen Modelle der Trainingssprecher in dem so geschaffenen a priori-optimierten Eigenraum innerhalb des hochdimensionalen Modellraums zu charakterisieren und eine Adaption an einen neuen Sprecher durchzuführen. Die Anzahl der benötigten Koordinaten beträgt dabei nur einen Bruchteil der Anzahl an Freiheitsgraden von anderen Adaptionsmethoden wie beispielsweise MLLR. Bei Verwendung des PCA-Verfahrens zur Ermittlung der Eigenvektoren der Kovarianzmatrix der Supervektoren als Eigenraum-Basisvektoren kann die Bewertung der Eigenvektoren anhand der zugehörigen Eigenwerte erfolgen. Eigenvektoren mit höheren Eigenwerten sind wichtiger als Eigenvektoren mit niedrigeren Eigenwerten.

Mit dem erfindungsgemäßen Verfahren lässt sich das mit Hilfe des Eigenraums dargestellte, voranalysierte "Wissen über die Variabilität der verschiedenen Trainingssprecher zueinander als a priori-Wissen bei der Adaption nutzen, wobei die Adaption relativ schnell zu einem Optimum gelangt, da anders als in der genannten EP 0 984 429 A2 die Adaption nicht in der Art durchgeführt wird, dass das adaptierte Modell selbst im Eigenraum liegen muss. Somit wird auch für Sprecher, die Charakteristika aufweisen, welche weit von den verschiedenen Charakteristika der Trainingssprecher abweichen, ein optimales Modell gefunden. D. h. die erfindungsgemäß Methode führt sofort zu dem optimalen Modell, und es muss nicht zunächst ein Modell innerhalb des gefundenen Eigenraums entwickelt werden und dieses als neues Modell für eine weitere Anpassung mittels einer üblichen MAP- oder MLLR-Methode benutzt werden, um das optimale Modell zu finden. Als Ausgangs-Modell-Set wird vorzugsweise ein mittleres Modell-Set der verschiedenen sprecherabhängigen Modell-Sets der Trainingssprecher verwendet. Mit einem solchen Ausgangsmodell wurden bisher die besten Ergebnisse erzielt.

Ein Problem bei der Ermittlung des Eigenraums nach der in der EP 0 984 429 A1 genannten Methode besteht in der Umsetzung dieses Verfahrens zur Verwendung in der Erkennung von kontinuierlicher Sprache mit großem Vokabular. Bei einer solchen Spracherkennung bestehen erheblich mehr Möglichkeiten von aufeinanderfolgenden Phonemen, und es liegt häufiger ein Verschleiß von Silben etc. vor als bei einer Eingabe von einzelnen festgelegten Befehlen. Die reale Verteilung der Beobachtungen ist daher zu diffus, und es gibt zu viele Variationen. Bei der Verwendung von HM-Modellen kann daher beispielsweise eine akustische Einheit nicht mehr durch einen einfachen Zustand oder durch mehrere einzelne Zustände beschrieben werden, welche jeweils nur durch eine einzige Wahrscheinlichkeitsdichte, beispielsweise eine einfache Gauß- oder Laplace-Dichte, beschrieben werden. Stattdessen ist eine Mischung von verschiedenen Dichten nötig, d.h. es müssen mehrere solcher Dichten mit unterschiedlichen Wichtungen überlagert werden, um eine der realen Verteilung angepasste Wahrscheinlichkeitsdichte zu erreichen.

Geht man von einer Sprache aus, die 42 unterschiedliche Phoneme hat, und wird jedes dieser Phoneme durch nur drei Zustände pro Phonem (Anfangszustand, Mittelzustand, Endzustand) beschrieben, so führt dies bereits zu 142 verschiedenen Zuständen, die beschrieben werden müssen. Bei einer Verwendung von kontextabhängigen Phonemen, was bei einer Erkennung von kontinuierlicher Sprache sehr sinnvoll ist, werden für jedes Phonem verschiedene kontextabhängige Modelle trainiert, je nachdem, welches Phonem unmittelbar davor und/oder danach angrenzt (Triphone). Zur Beschreibung solcher Triphone einer Sprache sind insgesamt beispielsweise 2000 Zustände nötig. Bei der Verwendung einer ausreichenden Anzahl von verschiedenen Wahrscheinlichkeitsdichten pro Zustand (ca. 30) kommt man so zu etwa 60 000 verschiedenen Wahrscheinlichkeitsdichten. Dies führt bei dem üblicherweise verwendeten Merkmalsraum von ca. 30 bis 40 Dimensionen dazu, dass letzten Endes ein einzelner Sprecher durch annähernd zwei Millionen einzelne Modellparameter beschrieben wird. Diese Modellparameter umfassen alle Merkmalsparameter zur Beschreibung der 60 000 Wahrscheinlichkeitsdichten im Merkmalsraum, wobei in der Regel von jeder Dichte nur die Mittelwerte im Merkmalsraum festgelegt werden und die Varianz für alle Dichten gleich und konstant angenommen wird. Selbstverständlich können aber für jede Dichte auch zusätzliche Parameter verwendet werden, die die Kovarianz individuell für diese Dichte festlegen. Außerdem können die Modellparameter u.a. noch die Übergangswahrscheinlichkeiten zwischen den Zuständen und weitere Parameter zur Beschreibung der verschiedenen HM-Modelle umfassen. Die annähernd zwei Millionen Modellparameter müssen dann zur Darstellung in dem entsprechend dimensionierten Modellraum zu den Supervektoren verkettet werden. Hierbei muss auf die Anordnung der einzelnen Parameter geachtet werden. Im Prinzip ist die Anordnung der einzelnen Parameter zueinander zwar beliebig, jedoch muss sichergestellt werden, dass eine einmal gewählte Anordnung für alle Sprecher gleich gewählt wird. Insbesondere muss auch die Anordnung der einzelnen Merkmalsparameter, welche die einzelnen Wahrscheinlichkeitsdichten eines bestimmten Zustands beschreiben, für alle Sprecher so gewählt werden, dass die Parameter über alle Sprecher optimal korreliert sind. Nur im Falle der gleichartigen Anordnung aller Parameter innerhalb der Supervektoren der einzelnen Sprecher ist sichergestellt, dass die ermittelten Basisvektoren des Eigenraums die gewünschte Information zur Unterscheidung verschiedener Sprecher richtig repräsentieren.

Im Falle eines solchen Modellraums von nahezu zwei Millionen Dimensionen besteht außerdem das Problem, dass bei den derzeitig zur Verfügung stehenden Rechnern die Rechenkapazität und der Hauptspeicherplatz nicht ausreichen, um überhaupt Eigenraum-Basisvektoren nach den genannten Transformations-Verfahren ermitteln zu können.

Zur Lösung dieser Probleme wird daher bei einem besonders bevorzugten Ausführungsbeispiel des erfindungsgemäßen Verfahrens zur Ermittlung der Eigenraum-Basisvektoren zunächst in einem ersten Schritt ein gemeinsames sprecherunabhängiges Modell-Set für die Trainingssprecher unter Verwendung der Trainingssprachdaten aller beteiligten Trainingssprecher entwickelt. Die gesamten Trainingssprachdaten werden dabei dann herangezogen, um für die verschiedenen akustischen Einheiten jeweils sprecherunabhängige Modelle zu trainieren. Anschließend werden in einem zweiten Schritt die Trainingssprachdaten der einzelnen Trainingssprecher dazu verwendet, um das gefundene sprecherunabhängige Modell-Set jeweils an die einzelnen Trainingssprecher anzupassen. Diese Anpassung kann beispielsweise mit den üblichen Verfahren wie MAP oder MLLR erfolgen. Bei der Adaption der Modelle des gemeinsamen sprecherunabhängigen Modell-Sets an die Modelle der sprecherabhängigen Modell-Sets der einzelnen Sprecher sind die jeweiligen Bedeutungsinhalte der Sprachdaten bekannt. Es handelt sich um eine sogenannte "überwachte Adaption" ("supervised adaptation"). Bei dieser Adaption kann problemlos erfasst werden, welche Modellparameter der Modelle des sprecherunabhängigen Modell-Sets den einzelnen Modellparametern der entsprechenden Modelle der sprecherabhängigen Modell-Sets zugeordnet werden, so dass auch eine eindeutige Zuordnung der Parameter untereinander festlegbar ist. Die Verkettung der einzelnen Modellparameter der Modell-Sets zu den Supervektoren erfolgt dann derart, dass die Modellparameter der Modelle der sprecherabhängigen Modell-Sets, die denselben Modellparametern desselben Modells des sprecherunabhängigen gemeinsamen Modell-Sets zugeordnet sind, auch an den entsprechenden identischen Positionen der jeweiligen Supervektoren angeordnet werden. Somit ist auch bei einer außerordentlich hohen Vielzahl verschiedener Parameter, beispielsweise bei mehreren Millionen Parametern, eine eindeutige Anordnung der einzelnen Parameter innerhalb der Supervektoren gewährleistet. Das Verfahren bietet sich insbesondere zur Entwicklung von Eigenräumen für Sprachsysteme an, die auf Basis der eingangs genannten Hidden-Markow-Modelle arbeiten. Im Prinzip kann ein solches Verfahren aber auch bei anderen Modellen genutzt werden, bei denen es darum geht, eine Vielzahl von Parametern, geordnet zu Supervektoren, zu verketten, um so verschiedene Sprecher als Punkte in einem hochdimensionalen Modellraum darzustellen.

Außerdem wird zur Ermittlung der Basis-Vektoren des Eigenraums der hochdimensionale Modellraum zunächst durch einen einfachen Basiswechsel auf einen Sprecher-Unterraum reduziert, in dem die Supervektoren aller Trainingssprecher angeordnet sind. Die eigentliche Transformation zur Ermittlung der Eigenraum-Basisvektoren wird dann in diesem Sprecher-Unterraum durchgeführt. Anschließend werden die gefundenen Eigenraum-Basisvektoren auf einfache Weise in den Modellraum rücktransformiert. Ein solcher einfacher Basiswechsel ist beispielsweise durch eine Gram-Schmidt-Orthonormierung der Supervektoren selbst oder vorzugsweise durch eine solche Orthonormierung der Differenzvektoren der Supervektoren zu einem gewählten Ursprungsvektor möglich. Als Ursprungsvektor wird dabei vorzugsweise ein mittlerer Supervektor verwendet. Das ist der Supervektor, dessen Parameter jeweils die Mittelwerte der entsprechenden Parameter der einzelnen sprecherabhängigen Supervektoren sind. Ein solcher einfacher Basiswechsel lässt sich auf geeignete Weise auch in hochdimensionalen Räumen auf heutigen Rechnern problemlos durchführen. Um n verschiedene Sprecher in diesem Sprecher-Unterraum zu repräsentieren, muss der Sprecher-Unterraum maximal eine Dimension n-1 aufweisen, d.h. die Dimensionen des Raums, in dem dann die eigentliche Berechnung der Basisvektoren des Eigenraums durchgeführt wird, sind gegenüber dem ursprünglichen Modellraum stark reduziert, wodurch erhebliche Rechenleistung und Speicherplatz eingespart werden.

Die so ermittelten Eigenraum-Basisvektoren werden dann als Vorzugsrichtungen für die Gauß-Verteilung gewählt. Hierzu werden die Eigenraum-Basisvektoren als Hauptachsen der Verteilung mit einer großen Varianz angenommen, wogegen alle Richtungen senkrecht zu diesen Hauptachsen eine vordefinierte kleine oder sogar verschwindende Varianz haben. Bei der Anpassung des Ausgangsmodells an den jeweiligen Sprecher erfolgt diese dann relativ schnell in Richtung der Eigenraum-Basisvektoren und langsam oder gar nicht in jede beliebige andere Richtung.

Dieses Verfahren ist insbesondere dann besonders schnell, wenn die Eigenraum-Basisvektoren zuvor anhand ihrer Wichtigkeit für die Unterscheidung von verschiedenen Sprechern geordnet wurden und nur die wichtigsten der ermittelten Eigenraum-Basisvektoren, beispielsweise nur die zehn oder fünfzig wichtigsten Basisvektoren, zur Aufspannung des letztlich für die weitere Anpassung genutzten Eigenraums verwendet werden. Die Varianz der a priori-Verteilung entlang der verwendeten Basisvektoren kann dabei zudem in Abhängigkeit von der Wichtigkeit gewählt werden, so dass die Anpassung entlang der verschiedenen Eigenraum-Basisvektoren auch unterschiedlich schnell erfolgt. Selbstverständlich besteht auch die Möglichkeit, die Eigenraum-Basisvektoren zu klassifizieren und beispielsweise nur den wichtigsten Eigenraum-Basisvektoren jeweils ihrer Wichtigkeit entsprechende individuelle Varianzen zuzuordnen und allen übrigen Basisvektoren eine bestimmte Varianz zuzuordnen, die unterhalb der kleinsten Varianz der ausgewählten wichtigsten Basisvektoren liegt. Allen übrigen Richtungen wird dann eine noch kleinere oder verschwindende Varianz zugeordnet.

Mit dem erfindungsgemäßen Verfahren ist eine robuste und generell anwendbare Sprecheradaptierung innerhalb der ersten Sekunes oder sogar der ersten gesprochenen Phoneme eines kontinuierlichen, unbekannten Sprachsignals möglich. Der überwiegende Rechenaufwand muss nur einmal zur Bearbeitung des Trainingssprachmaterials und zur Auffindung des Eigenraums durchgeführt werden, wobei dieser Rechenaufwand selbst bei kontinuierlicher Spracherkennung mit großem Vokabular aufgrund der erfindungsgemäßen Durchführung eines Basiswechsels zur Reduzierung des Parameterraums auf einen Unterraum problemlos beherrschbar ist. Auf diese Weise kann der Eigenraum ohne direkte Nutzung der Millionen von Parametern effizient gebildet werden. Es wird an dieser Stelle noch einmal darauf hingewiesen, dass die Verwendung von Eigenraum-Basisvektoren als Vorzugsrichtungen ein besonders geeignetes Verfahren ist, um mittels des erfindungsgemäßen Verfahrens eine schnelle Anpassung zu erreichen. Selbstverständlich können aber für das Verfahren beliebige Vorzugsrichtungen ausgewählt werden, und auch die Ermittlung der Vorzugsrichtungen kann auf jede andere geeignete Weise erfolgen. Entscheidend ist lediglich, dass die a priori-Verteilung nicht sphärisch-symmetrisch ist, sondern in sinnvoller Weise eine Asymmetrie angibt, die die realen Bedingungen besser widerspiegelt als eine einfache sphärische symmetrische Verteilung.

Die Erfindung wird im Folgenden unter Hinweis auf die beigefügten Figuren anhand eines Ausführungsbeispiels näher erläutert. Die nachfolgend dargestellten Merkmale und die bereits oben beschriebenen Merkmale können nicht nur in den genannten Kombinationen, sondern auch einzeln oder in anderen Kombinationen erfindungswesentlich sein.

Es stellen dar:

Figur 1 eine schematische Darstellung des Ablaufs der verschiedenen Schritte des erfindungsgemäßen Verfahrens zur Erzeugung eines Eigenraums

Figur 2 eine Veranschaulichung der Anpassung eines sprecherunabhängigen Modells an zwei verschiedene Sprecher

Figur 3 eine schematische graphische Darstellung der Anpassungsschritte bei einer Anpassung eines Ausgangsmodells an einen neuen Sprecher nach der klassischen MAP-Methode ( Kurve 2) und nach der erfindungsgemäßen allgemeineren MAP-Methode unter Nutzung des Eigenraums (Kurve 1).

Bei dem dargestellten Ausführungsbeispiel zur Verwendung des Verfahrens bei der Erkennung von kontinuierlicher Sprache mit großem Vokabular wird zunächst auf folgende Weise ein Eigenraum auf Basis der Trainingssprachdaten einer Vielzahl von Trainingssprechern, hier von 300 Sprechern, gebildet. Das Verfahren beginnt damit, dass das gesamte Sprachdatenmaterial der Trainingssprecher dazu verwendet wird, um ein gemeinsames sprecherunabhängiges Modell-Set mit verschiedenen sprecherunabhängigen Modellen SI für die verschiedenen akustischen Einheiten zu trainieren.

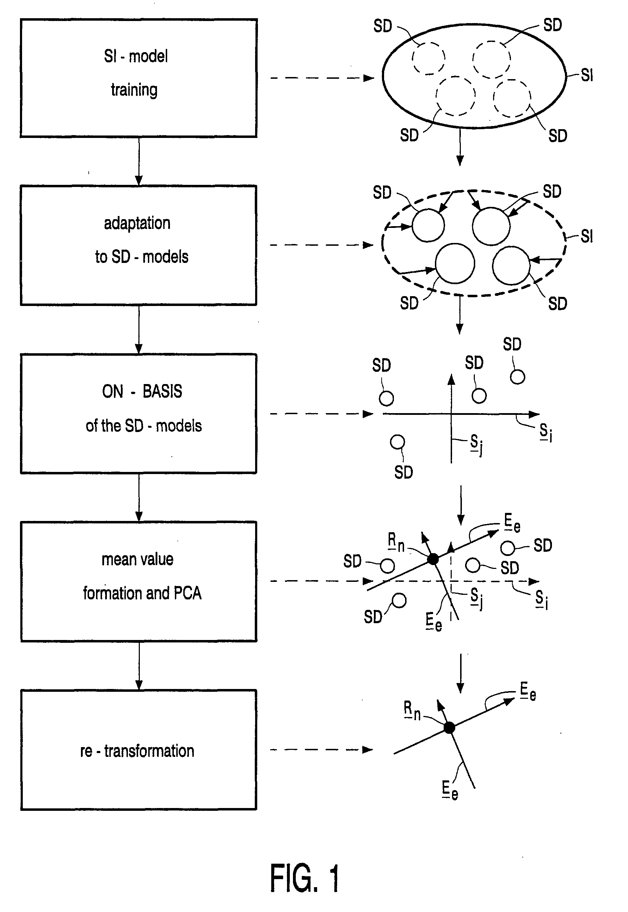

Eine solches sprecherunabhängiges Modell SI für eine akustische Einheit ist in Figur 1 im ersten Schritt als durchgezogene, ellipsenförmige Verteilung dargestellt. In der Realität handelt es sich hierbei um ein Modell, das aus drei Zuständen besteht, welche durch mehrere Wahrscheinlichkeitsdichten beschrieben werden. Diese Dichten werden wiederum durch 33 akustische Merkmalsparameter beschrieben, bei denen es sich jeweils um die Mittelwerte der Wahrscheinlichkeitsdichten im Merkmalsraum handelt. Im folgenden Ausführungsbeispiel werden als Merkmale 16 mel-cepstrale Koeffizienten und deren 16 erste zeitliche Ableitungen verwendet. Als 33. Merkmal kommt die zweite Ableitung der Energie, d.h. des 0. mel-cepstralen Koeffizienten, hinzu. Selbstverständlich kann ein solches Modell auch durch weniger Parameter oder durch noch weitere zusätzliche Parameter, beispielsweise die Varianzen der Dichteverteilungen, beschrieben werden.

In einem zweiten Schritt werden diese sprecherunabhängigen Modelle SI jeweils unter Verwendung des Trainingsmaterials der einzelnen Trainingssprecher an die einzelnen Sprecher angepasst, d.h. es werden sprecherabhängige Modelle SD erzeugt. Bei dem in Figur 1 dargestellten Ausführungsbeispiel wird das sprecherunabhängige Modell SI an vier verschiedene Sprecher angepasst.

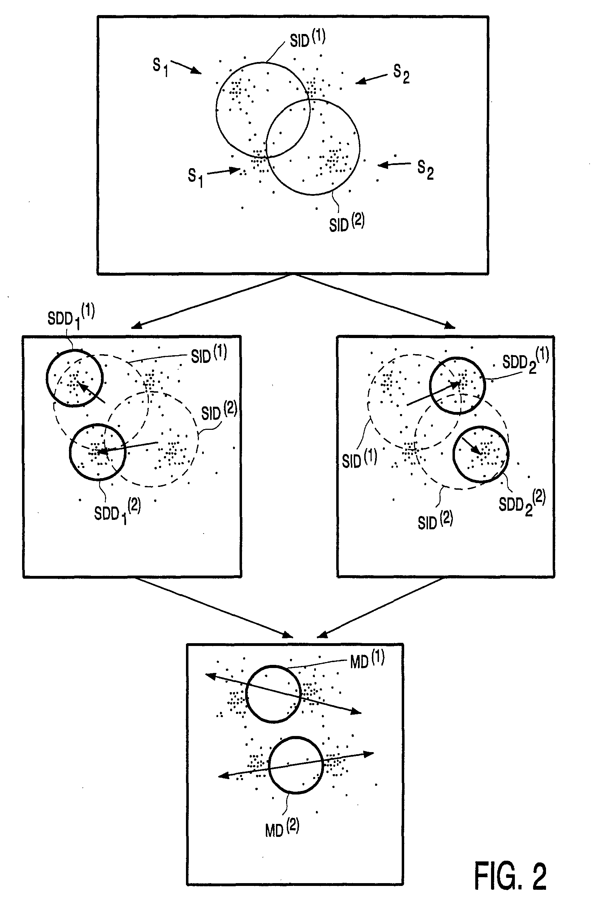

In Figur 2 wird das Verfahren anhand eines Beispiels mit nur zwei Trainingssprechern $S_1$, S2 noch einmal

genauer veranschaulicht. Die einzelnen Punkte entsprechen jeweils einzelnen aufgetretenen Beobachtungen zu einer ganz bestimmten akustischen Einheit, die von den beiden Trainingssprechern $S_1$, $S_2$ gesprochen wurde. Es handelt sich um eine Darstellung in einem Merkmalsraum, der hier zur Veranschaulichung nur zwei Dimensionen aufweist. Üblicherweise wird jedoch eine einzelne Beobachtung nicht durch zwei, sondern eine Vielzahl - im vorliegenden Ausführungsbeispiel wie gesagt 33 -unterschiedliche Merkmalsparameter beschrieben. Der Merkmalsraum ist daher im vorliegenden tatsächlichen Ausführungsbeispiel nicht zweidimensional wie in Figur 2, sondern 33-dimensional.

Wie zu sehen ist, sind die einzelnen Beobachtungen der bestimmten akustischen Einheit für beide Sprecher $S_1$, $S_2$ über weite Bereiche örtlich verteilt, wobei sich im gezeigten Fall für beide Sprecher $S_1$, $S_2$ deutlich jeweils zwei lokale Maxima herausgebildet haben. In einem Modell ist diese akustische Einheit daher mit einer einzigen gaußschen Wahrscheinlichkeitsdichte nicht ausreichend gut modellierbar, sondern es muss eine Überlagerung von mindestens zwei Wahrscheinlichkeitsdichten verwendet werden, um die zwei Maxima in der realen örtlichen Verteilung der Beobachtungen wiederzugeben. In der Realität ist die Verteilung der Beobachtungen üblicherweise noch diffuser, sodass für eine gute Modellierung um die 30 Wahrscheinlichkeitsdichten überlagert werden.

Um nun festzulegen, welche Dichte eines Modells für eine bestimmte akustische Einheit eines bestimmten Sprechers mit welcher Dichte des entsprechenden Modells für die gleiche akustische Einheit eines anderen Sprechers korrespondiert, wird zunächst aus allen Trainingssprachdaten ein gemeinsames sprecherunabhängiges Modell trainiert. In Figur 2 weist dieses Modell genau zwei sprecherunabhängige gaußsche Wahrscheinlichkeitsdichten $SID^{(1)}$, $SID^{(2)}$ auf. Dieses sprecherunabhängige Modell wird dann in einem nächsten Schritt jeweils an die beiden einzelnen Sprecher $S_1$, $S_2$ adaptiert, wobei das bekannte Trainingssprachmaterial der beiden einzelnen Sprecher $S_1$, $S_2$ verwendet werden kann. Dies führt zu einem sprecherabhängigen Modell mit zwei Wahrscheinlichkeitsdichten $SDD^{(1)}_1$, $SDD^{(2)}_1$ für den ersten Sprecher $S_1$ und zu einem weiteren sprecherabhängigen Modell mit zwei Wahrscheinlichkeitsdichten $SDD^{(1)}_2$, $SDD^{(2)}_2$ für den zweiten Sprecher $S_2$. Da die Modelle jeweils aus dem gleichen sprecherunabhängigen "Start-"Modell entwickelt wurden, ist die Zuordnung der Wahrscheinlichkeitsdichten klar, es korrespondieren jeweils die Wahrscheinlichkeitsdichten $SDD^{(1)}_1$, $SDD^{(2)}_1$, $SDD^{(1)}_2$, $SDD^{(2)}_2$ der beiden Sprecher $S_1$, $S_2$, die aus derselben Wahrscheinlichkeitsdichte $SID^{(1)}$, $SID^{(2)}$ des sprecherunabhängigen Modells entwickelt wurden. In dem in Figur 2 dargestellten vereinfachten Fall ist diese richtige Zuordnung auch durch die Lage der lokalen Maxima der Verteilungen der einzelnen Beobachtungen der Sprecher $S_1$, $S_2$ mit dem bloßen Auge zu ersehen. Das Problem wird aber deutlich, wenn man bedenkt, dass bei einer realen Auswertung von Trainingssprachdaten nicht zwei Verteilungen in einem zweidimensionalen Raum, sondern ca. 30 Verteilungen in einem 33-dimensionalen Raum einander zuzuordnen sind, wobei die einzelnen Verteilungen eines Zustands eines Modells eng übereinanderliegen.

Durch dieses Zuordnungsverfahren wird erreicht, dass eine klare Parameterzuordnung jeder einzelnen Dichte, jedes einzelnen Zustands und jedes einzelnen Modells für jeden der Sprecher existiert. Anhand dieser bekannten Ordnung können dann sämtliche Parameter für alle Sprecher jeweils in einen Supervektor pro Sprecher hintereinander verkettet werden, wobei sichergestellt wird, dass in allen Supervektoren für alle Sprecher die gleiche Anordnung der Parameter vorliegt. Mit Hilfe dieser Supervektoren lässt sich jeder einzelne Sprecher genau als ein Punkt in dem hochdimensionalen Modellraum, im vorliegenden Ausführungsbeispiel ein etwa $2 \times 10^6$-dimensionaler Raum, darstellen. Dieser Modellraum enthält alle Informationen der Sprechervariationen im Training.

Um die Informationen für die erfindungsgemäße Spracherkennung effektiv nutzen zu können, ist eine Reduzierung der Datenmenge, insbesondere eine Reduzierung der Dimensionen des Modellraums, notwendig, ohne dass hierbei wesentliche Informationen verloren gehen. Hierzu wird die "Eigenvoice"-Methode verwendet, bei der auf den Supervektoren der einzelnen Sprecher eine Transformation durchgeführt wird, um die Basis-vektoren eines Eigenraums zu finden. Bei dieser Transformation werden Reduktionskriterien angewendet, die auf der Variabilität, beispielsweise der Varianz, der zu transformierenden Vektoren untereinander basieren. Eine Möglichkeit der Transformation ist - wie eingangs genannt - die "Principal Component Analysis" (PCA). Ebenso können aber selbstverständlich auch hier andere geeignete Methoden wie die "Linear Discriminant Analysis" (LDA), die "Factor Analysis" (FA), die "Independent Component Analysis" (ICA) oder die "Singular Value Decomposition" (SVD) verwendet werden.

Im folgenden Ausführungsbeispiel wird davon ausgegangen, dass zum Auffinden der Eigenraum-Basisvektoren eine PCA-Transformation durchgeführt wird, d.h. es werden die Eigenvektoren einer mittels der Supervektoren der einzelnen Sprecher ermittelten Kovarianzmatrix und die zugehörigen Eigenwerte gesucht. Diese Eigenvektoren bilden dann die Eigenraum-Basisvektoren.

In der folgenden detaillierteren mathematischen Beschreibung dieses Verfahrens werden folgende Notationen verwendet:

$n_P$    ist die Anzahl der anzupassenden Modellparameter; bei dem vorliegenden Ausführungsbeispiel die Dimension des Merkmalsraums (d.h. die Anzahl der akustischen Merkmalsparameter), multipliziert mit der totalen Anzahl der Wahrscheinlichkeitsdichten

$n_S$    ist die Anzahl der Trainingssprecher, durch die die Trainingssprachdaten erzeugt wurden; $n_S \ll n_P$

$P$ ist der Modellraum, d.h. der Raum aller Modellparameter $n_p$, bei dem vorliegenden Ausführungsbeispiel sind dies alle Mittelwerte aller Wahrscheinlichkeitsdichten im Merkmalsraum. ( Hierbei werden lineare Strukturen verwendet. Dies muss bei der Darstellung von anzupassenden Parametern berücksichtigt werden. Wenn z.B. Varianzen $\sigma$ angepasst werden, so bietet sich log $(\sigma)$ als gute Koordinate an, um Transformationen zu sehr kleinen oder sogar negativen Werten von $\sigma$ zu vermeiden). $P$ hat die Struktur eines affinen euklidischen Raums, das bedeutet, dass Vektoren eines $n_p$-dimensionalen Vektorraums verwendet werden können, um Translationen in $P$ auf einem natürlichen Weg zu definieren. Die Elemente von $P$ werden im Folgenden einfach unterstrichen. Lineare Abbildungen in diesem Raum sind zweifach unterstrichen.

$\underline{R}_i$ ist ein Element von $P$ ( z.B. ein Satz von Modellparametern eines möglichen Sprechers), d.h. ein Supervektor eines Sprechers; $i$ = 1 bis $n_S$.

Anstelle der Kovarianzmatrix der Supervektoren selbst wird im Folgenden die Kovarianzmatrix der Differenzvektoren $\underline{D}_i$ der Supervektoren zu einem "mittleren Supervektor" $\underline{R}_M$ aller Sprecher bestimmt.

Ausgangspunkt ist hierfür die Bestimmung des Mittelwerts $\underline{R}_M$ für die Supervektoren aller $\underline{R}_i$ aller Sprecher:

$$\underline{R}_M = \frac{1}{n_S} \sum_i \underline{R}_i \qquad (1)$$

Dieser mittlere Supervektor $\underline{R}_M$ ist, wie Formel (1) zeigt, ein komponentenweise gemittelter Supervektor aller Sprecher und repräsentiert somit ein mittleres Modell-Set der einzelnen sprecherabhängigen Modell-Sets der Trainingssprecher.

Anschließend werden die Abweichungen, d.h. die Differenzvektoren $\underline{D}_i$, der einzelnen Supervektoren $\underline{R}_i$ zu diesem mittleren Supervektor $\underline{R}_M$ bestimmt:

$$\underline{D}_i = \underline{R}_i - \underline{R}_M \qquad (2)$$

Alle weiteren Berechnungen finden nun mit diesen Differenzvektoren $\underline{D}_i$ statt.

In Figur 2 ist im untersten dargestellten Verfahrensschritt für die beiden jeweils zusammengehörigen sprecherabhängigen Dichten SDD$^{(1)}_1$, SDD$^{(1)}_2$ und SDD$^{(2)}_1$, SDD$^{(2)}_2$ eine mittlere Dichte MD$^{(1)}$, MD$^{(2)}$ dargestellt. Es handelt sich hierbei um Dichten MD$^{(1)}$, MD$^{(2)}$, die die gleiche Varianz aufweisen wie die sprecherabhängigen Dichten SDD$^{(1)}_1$, SDD$^{(1)}_2$, SDD$^{(2)}_1$, SDD$^{(2)}_2$. Der Mittelwert dieser mittleren Dichten MD$^{(1)}$, MD$^{(2)}$ liegt jeweils im Mittelwert der Mittelwerte der jeweiligen einzelnen Dichten SDD$^{(1)}_1$, SDD$^{(1)}_2$ und SDD$^{(2)}_1$, SDD$^{(2)}_2$ der beiden Sprecher S$_1$, S$_2$.

Die Kovarianzmatrix $\underline{\underline{K}}$ der Differenzvektoren $\underline{D}_i$ erhält man durch Multiplikation der Vektoren $\underline{D}_i$ als Zeilen in einer $n_S \times n_P$-Matrix $\underline{\underline{D}}$ mit ihrer transformierten $\underline{\underline{D}}^{tr}$:

$$\underline{\underline{K}} = \underline{\underline{D}}^{tr} \underline{\underline{D}} \qquad (3)$$

Die i.a. $n_S$ Eigenvektoren $\underline{E}_1,...\underline{E}_{ns}$ dieser Kovarianzmatrix $\underline{\underline{K}}$ mit Eigenwert > 0 sind die an sich gesuchten Basisvektoren des Eigenraums. Bei diesen PCA-Eigenvektoren $\underline{E}_1,...\underline{E}_{nS}$ handelt es sich um die Hauptachsen der Kovarianzmatrix $\underline{\underline{K}}$ oder den "Trägheits-Tensor". Die Eigenvektoren entsprechen jeweils den Achsen, entlang derer sich die einzelnen Sprecher voneinander unterscheiden. Da die Kovarianzmatrix $\underline{\underline{K}}$ aus den Differenzvektoren $\underline{D}_i$ der Supervektoren $\underline{R}_i$ zu dem mittleren Supervektor $\underline{R}_M$ gebildet wurde, verlaufen die Eigenvektoren $\underline{E}_1,...\underline{E}_{nS}$ jeweils durch den mittleren Supervektor $\underline{R}_M$, der den Ursprung des Eigenraums bildet.

Für zwei Dimensionen sind die Richtungen der Eigenvektoren in dem unteren Teil von Figur 2 anschaulich dargestellt. Sie laufen jeweils durch den Mittelpunkt der aus den beiden sprecherabhängigen Dichten SDD$^{(1)}_1$, SDD$^{(1)}_2$ und SDD$^{(2)}_1$, SDD$^{(2)}_2$ gebildeten mittleren Dichten MD$^{(1)}$, MD$^{(2)}$ entlang der Verbindungsrichtung der beiden jeweils zu einer mittleren Dichte MD$^{(1)}$, MD$^{(2)}$ gehörigen sprecherabhängigen Dichten SDD$^{(1)}_1$, SDD$^{(1)}_2$ und SDD$^{(2)}_1$, SDD$^{(2)}_2$.

Da jedoch derartige Transformationen wie die Berechnung der Eigenvektoren einer Kovarianzmatrix in einem nahezu $2 \times 10^6$-dimensionalen Raum äußerst rechenaufwendig sind und hierzu ein enormer Hauptspeicherplatz benötigt wird (um bei den erforderlichen Rechenoperationen die Vektoren und Matrizen zu speichern), lassen sich diese Transformationen mit den derzeit vorhandenen Rechnern kaum realisieren. Daher ist ein weiterer Schritt erforderlich, um den Raum vor der eigentlichen Berechnung der Eigenraum-Basisvektoren zu reduzieren.

Hierzu wird zunächst eine Orthonormal-Basis gesucht, die einen Unterraum (im Folgenden auch Sprecher-Unterraum genannt) innerhalb des Modellraums aufspannt, in der sämtliche zu den einzelnen Sprechern bzw. deren Modellen gehörige Differenzvektoren $\underline{D}_j$ repräsentiert sind. Um diese Orthonormal-Basis zu finden, wird eine einfache Basistransformation durchgeführt, die relativ wenig Rechenaufwand fordert. Im folgenden Ausführungsbeispiel wird hierbei das Gram-Schmidtsche Orthonormierungsverfahren gewählt. Selbstverständlich kann auch ein anderes einfaches Transformationsverfahren für einen Basiswechsel, beispielsweise eine Löwdin-Transformation, verwendet werden.

Bei der Durchführung des Gram-Schmidtschen Orthonormierungsverfahrens wird zunächst einer der Differenzvektoren, beispielsweise $\underline{D}_1$ als erster Schmidt-Basisvektor $\underline{S}_1$ der gesuchten Orthonormal-Basis genutzt und lediglich normiert. Anschließend wird ein zweiter Differenzvektor $\underline{D}_2$ zu diesem ersten Schmidt-Basisvektor $\underline{S}_1$ orthonormiert, indem dieser zweite Differenzvektor $\underline{D}_2$ zunächst auf den ersten gefundenen Schmidt-Basisvektor $\underline{S}_1$ projiziert wird, und die zu dem ersten Schmidt-Basisvektor $\underline{S}_1$ parallele Komponente des zweiten Differenzvektors $\underline{D}_2$ vom zweiten Differenzvektor $\underline{D}_2$ abgezogen wird. Die verbleibende, zum ersten Schmidt-Basisvektor $\underline{S}_1$ senkrechte Komponente des zweiten Differenzvektors $\underline{D}_2$ wird dann normiert und bildet so den zweiten Schmidt-Basisvektor $\underline{S}_2$. Entsprechend wird mit den weiteren Differenzvektoren $\underline{D}_3$ bis $\underline{D}_S$ verfahren, wobei jeweils zunächst alle Komponenten parallel zu den bereits bestehenden Schmidt-Basisvektoren $\underline{S}_j$ abgezogen werden und die dazu senkrechte Komponente als neuer Schmidt-Basisvektor $\underline{S}_3$ bis $\underline{S}_S$ normiert wird.

Da auch eine solche Orthonormierung von 300 Vektoren in einem etwa $2 \times 10^6$-dimensionalen Raum aufgrund des begrenzten Speicherplatzes in normalen Rechnern nicht ohne weiteres durchführbar ist, wird bei dem konkreten Ausführungsbeispiel diese Orthonormierung blockweise durchgeführt. Dabei wird davon ausgegangen, dass der Hauptspeicher des Rechners in der Lage ist, gleichzeitig $2n$-Supervektoren abzuspeichern. Es wird dann wie folgt vorgegangen:

Zunächst werden die ersten $2n$-Vektoren $\underline{D}_{1 \ldots 2n}$ orthonormiert und ihre Darstellung in der neuen gefundenen Basis $\underline{S}_{1 \ldots 2n}$ gespeichert.

Für jeden weiteren Block von $n$-Vektoren $\underline{D}_j$ werden dann zunächst für jeden Block von $n$ orthonormierten Schmidt-Basisvektoren $\underline{S}_j$, die bereits aufgefunden wurden, die Projektionen der $\underline{D}_j$ auf diese $\underline{S}_j$ subtrahiert. Die Projektions-Koeffizienten $\underline{D}_j$ in der aufgefundenen Orthonormal-Basis werden hierbei zur Repräsentation der $\underline{D}_j$ in der Orthonormal-Basis gespeichert. Anschließend wird der Rest, d.h. die senkrechten Komponenten, untereinander orthonormiert. Die neu aufgefundenen Schmidt-Basisvektoren $\underline{S}_j$ der Orthonormal-Basis und die Repräsentations-Koeffizienten der einzelnen Differenzvektoren $\underline{D}_j$ in dieser Basis werden dabei wiederum gespeichert.

Eine solche Gram-Schmidtsche Orthonormierung benötigt

$$n_P \left( \frac{3}{2} n_S (n_S - 1) + n_S \right) \approx \frac{3}{2} n_S^2 n_P \qquad (4)$$

floating-point-Operationen. Dies sind zum Beispiel bei 300 Sprechern und 1 000 000 Dimensionen nahezu $10^{11}$ einzelne Operationen, die in etwa ein bis zwei Stunden CPU-Zeit durchführbar sind.

Da die Differenzvektoren $\underline{D}_j$ über den mittleren Supervektor $\underline{R}_M$ gemäß den Formeln (1) und (2) zusammenhängen, sind sie linear abhängig. Dementsprechend wird ein Orthonormal-Basisvektor weniger benötigt als Trainingssprecher vorhanden sind. Dies entspricht dem anschaulichen Beispiel, dass sich drei Punkte innerhalb eines dreidimensionalen Raums immer in einer gemeinsamen Fläche darstellen lassen, d.h. es wird auch hier maximal ein zweidimensionaler Unterraum benötigt, um die drei Punkte des dreidimensionalen Raums darzustellen. Die Einsparung einer Dimension (da ein Freiheitsgrad für die - hier ohnehin unwesentliche - Information der Position der Sprecher relativ zum absoluten 0-Punkt des Modellraums eingespart wird) ist ein Grund, warum beim vorliegenden Ausführungsbeispiel die Differenzvektoren $\underline{D}_j$ der Sprecher und nicht die Supervektoren $\underline{R}_j$ selbst zur Bildung des Sprecher-Unterraums und zur Berechnung der Kovarianzmatrix herangezogen werden. Außerdem wäre sonst der Koordinatensprung in den Eigenraum einbezogen, der jedoch zur Sprecheradaptierung keinen sinnvollen Beitrag liefert.

Auf Wunsch kann außerdem der Supervektor des ursprünglich geschaffenen gemeinsamen sprecherunabhängigen Modells für alle Trainingssprecher in dieser neuen Schmidtschen Orthonormal-Basis dargestellt werden. In diesem Fall erhöht sich die Basis natürlich um eine Dimension. Die Dimension des Unterraums entspricht dann der Anzahl der Sprecher, da ja das gemeinsame sprecherunabhängige Modell durch einen eigenen, von den Supervektoren der einzelnen Sprecher unabhängigen Supervektor repräsentiert wird und somit einen zusätzlichen gemischten Sprecher darstellt, welcher eine besonders große Varianz betreffend der einzelnen akustischen Einheiten aufweist.

Anstelle der Matrix $\underline{D}$ der Abstandsvektoren $\underline{D}_j$ im kompletten Modellraum können nun die Darstellungen der Differenzvektoren $\underline{D}_j$ innerhalb der Schmidtschen Orthonormal-Basis des Sprecher-Unterraums in Spalten zu einer

Matrix $\underline{\theta}$ kombiniert werden. Diese Matrix $\underline{\theta}$ ist eine $n_S \times n_S$-Matrix, d.h. sie hat nur noch 300 mal 300 Elemente. Im Gegensatz dazu enthält die Matrix $\underline{\underline{D}}$ der Differenzvektoren $\underline{D_j}$ im ursprünglichen Modellraum 300 mal ca. 2 000 000 Elemente.

Für die gesuchte Kovarianzmatrix $\underline{\underline{K}}$ der Differenzvektoren $\underline{D_j}$ gilt dann

$$\underline{\underline{K}} = \underline{\underline{D}}^{tr} \underline{\underline{D}}$$
$$= \underline{\underline{S}}^{tr} \underline{\underline{\theta}}^{tr} \underline{\underline{\theta}} \, \underline{\underline{S}} \qquad\qquad (5)$$

wobei $\underline{\underline{S}}$ eine $n_S \times n_P$-Matrix der in Zeilen kombinierten Basisvektoren $\underline{S_j}$ der Schmidtschen Orthonormal-Basis ist. Da die Basisvektoren $\underline{S_j}$ orthonormal sind, reicht eine Diagonalisierung von $\underline{\theta}^{tr}\underline{\theta}$ und eine anschließende Rücktransformierung mit der Matrix $\underline{\underline{S}}$ aus, um die PCA-Eigenvektoren $\underline{E}_1,...\underline{E}_{n_S}$ im Modellraum zu finden. Da die Vektoren $\underline{D_j}$ selbst zur Orthonormierung geführt haben, ist die Matrix $\underline{\theta}$ der Darstellungen der Differenzvektoren $\underline{D_j}$ in der Schmidtschen Orthonormal-Basis eine Dreiecksmatrix, was die Diagonalisierung von $\underline{\theta}^{tr}\underline{\theta}$ besonders einfach macht.

Das Ergebnis ist dann ein Eigenraum, dessen Dimension der Anzahl der Sprecher -1 entspricht, dessen Ursprung im Mittelpunkt aller ursprünglichen Supervektoren der einzelnen Sprecher liegt und dessen Basisvektoren $\underline{E}_1,...\underline{E}_{n_S}$ entlang der Variabilitäten der einzelnen Sprecher verlaufen.

Alternativ ist es natürlich auch möglich, zunächst eine Orthonormal-Basis der Supervektoren selbst durch einen einfachen Basiswechsel, beispielsweise eine Gram-Schmidt-Orthonormierung, zu finden. Diese so gefundene Basis kann dann im Ursprung auf den Mittelwert aller Supervektoren verschoben werden und anschließend wird erst die PCA-Methode zur Ermittlung der Eigenvektoren durchgeführt. Dieses Verfahren der Bildung einer Schmidtschen Orthonormal-Basis aus den Supervektoren selbst, einer anschließenden Mittelwertbildung in der neuen Basis und einer darauffolgenden Durchführung des PCA-Verfahrens sowie der anschließenden Rücktransformation ist in Figur 1 in den letzten drei Verfahrensschritten dargestellt.

Ebenso kann natürlich auch auf der durch den einfachen Basiswechsel aufgefundenen Orthonormal-Basis der Supervektoren die PCA-Methode durchgeführt werden und anschließend eine Transformation auf einen gewünschten Ursprung durchgeführt werden. Weiterhin kann anstelle des Mittelwerts aller Supervektoren auch der Supervektor des gemeinsamen sprecherunabhängigen Modells aller Trainingssprecher als Ursprung für den Eigenraum verwendet werden.

Der aufgefundene Eigenraum (und die Darstellungen der Sprecher hierin) ist bereits gegenüber dem ursprünglichen Modellraum erheblich reduziert und enthält dennoch alle Informationen über die Sprechervariationen im Training. Er ist aber immer noch zu komplex, um während einer schnellen Erkennung genutzt zu werden. Daher ist es notwendig, die Dimension weiter zu verringern. Dies kann dadurch erreicht werden, dass einfach einige der Eigenvektoren verworfen werden.

Hierzu können in dem PCA-Verfahren nicht nur die Eigenvektoren, sondern auch die zugehörigen Eigenwerte der Kovarianzmatrix $\underline{\underline{K}}$ ermittelt werden. (Unter "Eigenwerten" werden im Sinne dieser Schrift, anders als in der eingangs genannten EP 0 984 429 A2, nicht die Koeffizienten eines Modells bei der Darstellung als Linearkombination der Eigenvektoren verstanden, sondern der zu dem jeweiligen Eigenvektor $\underline{E_e}$ der Matrix $\underline{\underline{K}}$ gehörige Eigenwert $e$, für den gilt: $\underline{E_e}\, \underline{\underline{K}} = e\, \underline{\underline{K}}$). Diese Eigenwerte können genutzt werden, um eine Rangordnung der Eigenvektoren $\underline{E_e}$ festzulegen. Je höher der Eigenwert, desto wichtiger ist der zugehörige Eigenvektor $\underline{E_e}$ zur Unterscheidung zweier verschiedener Sprecher. Daher ist es möglich, eine bestimmte Anzahl $n_E$ von den wichtigsten Eigenvektoren herauszusuchen, welche tatsächlich für die Aufspannung eines Eigenraums für ein Spracherkennungssystem verwendet werden sollen. In einem bereits durchgeführten Ausführungsbeispiel des Verfahrens sind das lediglich die Eigenvektoren mit den zehn größten Eigenwerten, in einem anderen Beispiel die Eigenvektoren mit den 50 wichtigsten Eigenwerten.

Es versteht sich von selbst, dass dann auch nur diese tatsächlich zur Aufspannung des Eigenraums verwendeten Eigenvektoren, die sogenannten "Eigenvoices" $\underline{E_e}$, in den Modellraum zurücktransformiert werden müssen und nicht sämtliche aufgefundenen Eigenvektoren der Kovarianzmatrix $\underline{\underline{K}}$. Durch diese Wahl der Basis für den Eigenraum ist sichergestellt, dass bei einer Projektion eines Supervektors $\underline{R_j}$ auf den reduzierten Eigenraum mit nur $n_E$ Dimensionen, verglichen mit dem originalen Supervektor $\underline{R_j}$, der resultierende mittlere quadratische Fehler minimiert ist .

Der so aufgefundene Eigenraum kann im Prinzip auf verschiedene Weise genutzt werden, um möglichst schnell ein Ausgangsmodell an einen neuen Sprecher in geeigneter Weise anzupassen. Insofern kann dieser Eigenraum auch als kompletter Datensatz, der bereits alle wesentlichen Informationen der Trainingssprachdaten in vorausgewerteter Weise enthält, in verschiedene Spracherkennungssysteme implementiert werden, die auf unterschiedliche Weise die Daten zur Anpassung eines Ausgangsmodells an einen neuen Sprecher nutzen.

Im vorliegenden Fall wird der Eigenraum als a priori-Wissen zum Aufbau einer Wahrscheinlichkeitsverteilung für das erfindungsgemäße verallgemeinerte MAP-Verfahren genutzt. Im Folgenden wird das Adaptionsverfahren genauer beschrieben. Hierbei werden folgende Notationen zusätzlich verwendet:

$n_E$      ist die Anzahl der bei der Anpassung verwendeten Eigenvektoren (Eigenvoices);
$n_E < n_S$

$n_M$      ist die Anzahl der akustischen Merkmalsparameter (Komponenten des Merkmalsvektors) eines einzelnen Wahrscheinlichkeitsdichte-Mittelwerts

$i(\tau)$      ist der Index einer beobachteten Wahrscheinlichkeitsdichte (als Komponente eines $P$ -Vektors) zur Zeit $\tau$

$\underline{\mu}_\tau$      ist eine Beobachtung zur Zeit $\tau$, dargestellt als Vektor in $P$ . Die $n_M$ -akustischen Merkmalsvektoren $i(\tau)$ in $P$ weichen von 0 ab, alle anderen $n_P - n_M$ -Komponenten sind 0.

Die folgenden Vektoren sind vom selben Typ wie $\underline{\mu}_\tau$ :

$\underline{\bar{\mu}}_i$      ist der Mittelwert aller Beobachtungen der Wahrscheinlichkeitsdichte $i$

$\underline{\mu}_i^q$      ist das Mittel der Wahrscheinlichkeitsdichte im Zielvektor, beispielsweise dem Adaptionsergebnis

$\underline{\mu}_i^0$      ist das Mittel der Wahrscheinlichkeitsdichte in dem a priori-Vektor, beispielsweise dem sprecherunabhängigen Vektor

$\underline{E}_e$:      ist eine "Eigenstimme" (Eigenvoice), d.h. ein Eigenvektor für einen der $n_E$ - größten Eigenwerte $e$ der Kovarianzmatrix der Trainingssprecher

$\beta = \dfrac{1}{\sigma^2}$;      $\sigma$ ist die Wahrscheinlichkeitsdichten-Varianz, die hier als global feststehend und für alle Dichten gleich angenommen wird. Um einige Indizes in den Formeln einzusparen, soll diese Dichte hier auch von den akustischen Merkmalen selbst unabhängig sein ( normierte Varianz)

$$\alpha = \frac{1}{\sigma_0^2}$$

ist der Adaptionsparameter für alle Transformationen, die orthogonal zu den "Eigenstimmen" sind. $\sigma_0$ ist die angenommene Varianz von Sprechern in dieser Richtung und sollte daher kleiner sein als alle beobachteten Eigenstimmen-Varianzen. Der Variationsparameter $\alpha$ in dem üblicherweise verwendeten MAP-Verfahren entspricht hier $\frac{\beta}{\alpha}$.

$$\varepsilon_e = \frac{1}{\sigma_e^2}$$

ist der Anpassungsparameter für Transformationen parallel zu den "Eigenstimmen" $\underline{E}_e$

Die Anwendung eines MAP-Verfahrens bedeutet, dass nach einem Element $\underline{\mu}^q$ des Modellraums $P$ gesucht wird, das die a posteriori-Wahrscheinlichkeit einer Beobachtung X maximiert. D.h. es wird der Supervektor gesucht, der mit größter Wahrscheinlichkeit der Beobachtung X entspricht, wobei die Wahrscheinlichkeit $p(\underline{\mu}^q)$, dass der Supervektor $\underline{\mu}^q$ überhaupt vorkommt, berücksichtigt wird. Dies lässt sich in einer Formel wie folgt darstellen:

$$\underline{\mu}_{MAP}^q = \arg\max_{\underline{\mu}^q} p\left(X \big| \underline{\mu}^q\right) p\left(\underline{\mu}^q\right) \tag{6}$$

Als Wahrscheinlichkeit $p(\underline{\mu}^q)$ wird im normalen MAP-Verfahren dabei eine sphärisch-symmetrische Gaußdichte-Verteilung angenommen, d.h. die Verteilung weist in jeder Richtung des Modellraums die gleiche Varianz auf. Somit wird bei einer Anpassung in jede Richtung des Modellraums gleich schnell adaptiert.
In dem erfindungsgemäßen allgemeineren MAP-Verfahren wird stattdessen eine asymmetrische Gaußsche Wahrscheinlichkeitsdichte gewählt, die in unterschiedliche Richtungen unterschiedlich gewichtet ist:

$$p\left(\underline{\mu}^q\right) = N \prod_i \exp\left\{-\frac{1}{2}\left(\underline{\mu}_i^q - \underline{\mu}_i^0\right)\underbrace{\left(\alpha\underline{1} + \sum_e \underline{E}_e^{tr}(\varepsilon_e - \alpha)\underline{E}_e\right)}_{:=\underline{A}}\left(\underline{\mu}_i^q - \underline{\mu}_i^0\right)^{tr}\right\} \qquad (7)$$

In den weiteren Erläuterungen wird von dieser veränderten Gauß-Verteilung ausgegangen. Wie üblich können nur für eine solche Gauß-Dichte die Verhältnisse exakt abgeleitet werden. Prinzipiell kann jedoch auch eine Laplace-Verteilung gewählt werden, für die die folgenden Ableitungen als Näherung anzunehmen sind.

Ohne den Summenanteil in der Matrix $\underline{A}$ würde sich die Formel (7) auf eine übliche sphärisch-symmetrische Gauß-Verteilung reduzieren. Der Summenanteil in der Matrix $\underline{A}$ sorgt anschaulich gesehen dafür, dass alle Vektoren $\underline{\mu}$ im Modellraum in Komponenten in Richtung eines Eigenvektors $\underline{E}_e$ und in dazu senkrechte Komponenten zerlegt werden. Die Komponenten in Richtung des Eigenvektors $\underline{E}_e$ werden mit dem Kehrwert $\varepsilon_e$ des jeweiligen Eigenvektors gewichtet, alle dazu senkrechten Komponenten mit dem Faktor $\alpha$.

Da

$$\alpha = \frac{1}{\sigma_0^2}$$

und

$$\varepsilon_e = \frac{1}{\sigma_e^2}$$

gesetzt ist, bedeutet dies, dass die Varianz $\sigma_e$ der Verteilung entlang eines Eigenvektors $\underline{E}_e$ gleich der Wurzel des zu dem Eigenvektor $\underline{E}_e$ gehörigen Eigenwerts ist. D .h. je größer der Eigenwert ist und je wichtiger der Eigenvektor ist, desto größer ist die Varianz. Da die Eigenvektoren die wichtigsten Hauptrichtungen innerhalb des Modellraums, entlang derer sich Sprecher unterscheiden lassen, repräsentieren, ist es selbstverständlich, dass die Varianz $\sigma_0$ in alle anderen Richtungen kleiner gewählt wird als die kleinste "Eigenvoice-Varianz" $\sigma_e$. Durch Einsetzen der Formel (7) in die allgemeine MAP-Formel erhält man:

$$\underline{\mu}_{MAP}^q = \arg\max_{\underline{\mu}^q} p\left(X|\underline{\mu}^q\right) p\left(\underline{\mu}^q\right)$$

$$= \arg\max_{\underline{\mu}^q} N' \prod_{Obs.\tau} e^{-\frac{1}{2}(\underline{\mu}_{i(\tau)}^q - \underline{\mu}_\tau)\beta\underline{1}(\underline{\mu}_{i(\tau)}^q - \underline{\mu}_\tau)^{tr}} \prod_i e^{-\frac{1}{2}(\underline{\mu}_i^q - \underline{\mu}_i^0)\underline{A}(\underline{\mu}_i^q - \underline{\mu}_i^0)^{tr}} \qquad (8)$$

$$= \arg\min_{\underline{\mu}^q} \sum_{Obs.\tau} (\underline{\mu}_{i(\tau)}^q - \underline{\mu}_\tau)\,\beta\underline{1}\,(\underline{\mu}_{i(\tau)}^q - \underline{\mu}_\tau)^{tr} + \sum_i (\underline{\mu}_i^q - \underline{\mu}_i^0)\,\underline{\underline{A}}\,(\underline{\mu}_i^q - \underline{\mu}_i^0)^{tr}$$

Der Übergang von der zweiten in die dritte Spalte der Formel (8) ist möglich, da anstelle des Arguments, welches das Produkt über alle e-Funktionen maximiert, genauso gut das Argument gesucht werden kann, welches die Summe aller Argumente der e-Funktionen minimiert.

Eine notwendige Bedingung für das gesuchte Minimum ist, dass die Ableitung bezüglich eines Variationsparameters $\varepsilon$ verschwindet:

$$\underline{\mu}^q \rightarrow \underline{\mu}^q + \varepsilon\Delta\underline{\mu}^q \qquad (9)$$

Hierbei gilt $\varepsilon = 0$ für alle Dichten $i$ und einem beliebigen $\Delta\underline{\mu}^q$.

Gemäß der untersten Zeile von Formel (8) findet im ersten Teil eine Aufsummierung über alle bisherigen Beobachtungen τ - bezeichnet mit "Obs. τ" - statt. Wenn ein Sprecher beispielsweise eine Sekunde gesprochen hat, so sind ca. 100 verschiedene Beobachtungen aufgenommen worden. Es findet dann eine Aufsummierung über alle diese 100 Beobachtungen statt. Hierbei handelt es sich um beliebige Beobachtungen, und die einzelnen beobachteten Dichten treten dort in der Reihenfolge auf, wie sie vom Sprecher gesprochen worden sind.

Für das weitere Adaptionsverfahren wird dabei das Auftreten jeder einzelnen Dichte $j$ innerhalb der gesamten bisher aufgetretenen Beobachtungen gezählt:

$$N_j = \sum_{Obs.i(\tau)=j} 1 \qquad (10)$$

$N_j$ ist folglich die Anzahl, wie oft eine Wahrscheinlichkeitsdichte $j$ bisher in den Sprachdaten des neuen Sprechers beobachtet wurde.

Außerdem wird der Mittelwert jeder beobachteten Dichte $j$ während der bisherigen Beobachtungen ermittelt:

$$N_j \underline{\overline{\mu}}_j := \sum_{Obs.i(\tau)=j} \underline{\mu}_\tau \qquad (11)$$

Die Ableitung der unteren Zeile von Formel (8) bezüglich des Variationsparameters ε sowie die Ersetzung des Aufsummierens über sämtliche Beobachtungen τ durch eine Aufsummierung über die verschiedenen Dichten $i$ führt zu folgender Formel:

$$\sum_i \left[ N_i \beta \left( \underline{\mu}_i^q - \underline{\overline{\mu}}_j \right) \underline{\underline{1}} + \alpha \left( \underline{\mu}_i^q - \underline{\mu}_j^0 \right) \underline{\underline{1}} + \sum_e (\varepsilon_e - \alpha) \left( \underline{\mu}_i^q - \underline{\mu}_i^0 \right) \underline{E}_e^{tr} \underline{E}_e \right] \Delta \underline{\mu}^{q\,tr} = 0 \qquad (12)$$

Allgemein gilt zur Bestimmung eines Anteils $\underline{\upsilon}^\perp$ eines Vektors senkrecht zu einem Eigenvektor $\underline{E}_e$ die Formel

$$\underline{\upsilon}^\perp = \underline{\upsilon} \underbrace{\left( \underline{\underline{1}} - \sum_e \underline{E}_e^{tr} \underline{E}_e \right)}_{:= \underline{\underline{P}}} \qquad (13)$$

Der Operator $\underline{\underline{P}}$ projiziert folglich auf einen Raum, welcher orthonormal zu allen Eigenvektoren $\underline{E}_e$ ist. Dieser Operator findet sich auch in Formel (12). Er eliminiert dort alle die Anteile, die den Projektor

$$\sum_e \underline{E}_e^{tr} \underline{E}_e$$

enthalten. Die verbleibenden Anteile können wie gewöhnlich, d.h. wie beim üblichen MAP-Verfahren, in Komponenten zerlegt werden.

Durch Einsetzen des Projektors $\underline{\underline{P}}$ der allgemeinen Formel (13) in Formel (12) erhält man:

$$\left[ N_i \beta \left( \underline{\mu}_i^q - \underline{\overline{\mu}}_i \right) + \alpha \left( \underline{\mu}_i^q - \underline{\mu}_i^0 \right) \right] \underline{\underline{P}} = 0 \quad \forall i \qquad (14)$$

Dies entspricht bis auf den zusätzlichen Projektor $\underline{P}$ dem Standard-MAP-Verfahren.

Die Lösung von Formel (14) ist bis auf die Komponenten parallel zu den Eigenvektoren $\underline{E}_e$ eindeutig. Eine spezielle Lösung von Formel (14) erhält man, indem man den Term innerhalb der eckigen Klammern = 0 setzt. Dies entspricht der bekannten üblichen MAP-Lösung:

$$\underline{\tilde{\mu}}_i^q = \frac{1}{N_i\beta + \alpha}\left(N_i\beta\underline{\overline{\mu}}_i + \alpha\underline{\mu}_i^0\right) = \underline{\mu}_i^0 + \left(1 - \frac{1}{1 + \frac{\beta}{\alpha}N_i}\right)\left(\underline{\overline{\mu}}_i - \underline{\mu}_i^0\right) \tag{15}$$

Da die Projektion auf den Eigenraum bereits von diesem Ausdruck separiert ist, sieht damit die komplette Lösung des ursprünglichen Systems der Gleichung (14) wie folgt aus:

$$\underline{\mu}^q = \underline{\mu}^0 + \left(\underline{\tilde{\mu}}^q - \underline{\mu}^0\right)\underline{\underline{P}} + \sum_e \chi_e \underline{E}_e \tag{16}$$

In dieser Formel entspricht der erste Summand auf der rechten Seite dem Startwert (Start-Supervektor), der zweite Summand enthält die zu den Eigenvektoren $\underline{E}_e$ senkrechten Anteile und der letzte Summand die zu den Eigenvektoren $\underline{E}_e$ parallelen Anteile. Der erste und der zweite Summand der Lösung (16) sind bekannt, da $\underline{\mu}^0$ bekannt ist und $\underline{\tilde{\mu}}^q$ nach Formel (15) ermittelt werden kann. Lediglich die Koeffizienten $\chi_e$ des letzten Summanden der linken Seite von Formel (16) müssen noch ermittelt werden, um die Gesamtlösung zu ermitteln.

Um diese verbleibenden $n_e$ Unbekannten zu erhalten, wird die Variationsgleichung (14) nun auf einen Eigenvektor $\underline{E}_f$ projiziert, d.h. es wird der Eigenvektor $\underline{E}_f$ als "beliebige" Variationsrichtung $\Delta\underline{\mu}^q$ in den Gleichungen (9) und (16) gewählt. Wiederum führt die Projektion zu einer Vereinfachung der Formel (16), jedoch zerfällt das System diesmal nicht in unabhängige Komponenten für einzelne Dichten. Da das Skalarprodukt $\underline{E}_j \cdot \underline{E}_e = 0$ für alle $e \neq j$ ist, verschwindet die hintere Summe in Formel (16) außer für die Fälle, in denen $e = j$ ist. Man erhält so:

$$\sum_i \left[ N_i\beta\left(\underline{\mu}_i^q - \underline{\overline{\mu}}_i\right) + \varepsilon_f\left(\underline{\mu}_i^q - \underline{\mu}_i^0\right)\right]\underline{E}_f^{tr} = 0 \quad \forall f \tag{17}$$

Dieser Ausdruck kann nun genutzt werden, um die gesuchten Koeffizienten $\chi_e$ in Formel (16) zu bestimmen, indem der Ansatz von Formel (16) in Formel (17) eingesetzt wird. Dies führt zu einem System von Gleichungen mit $n_e$ Unbekannten. Wird dabei $\underline{\underline{N}}$ als die Diagonalmatrix gesetzt, welche als Komponenten die Anzahl der Beobachtungen $N_i$ der korrespondierenden Dichten $i$ enthält, ergibt sich daraus die Formel:

$$0 = \left[\beta\left(\sum_e \chi_e \underline{E}_e + \underline{\mu}^0 + \left(\underline{\tilde{\mu}}^q - \underline{\mu}^0\right)\underline{\underline{P}} - \underline{\overline{\mu}}\right)\underline{\underline{N}} + \varepsilon_f \sum_e \chi_e \underline{E}_e\right]\underline{E}_f^{tr}$$

$$= \left[\sum_e \chi_e \underbrace{\left(\beta\underline{E}_e \underline{\underline{N}}\underline{E}_f^{tr} + \delta_{ef}\varepsilon_f\right)}_{:=B_{ef}}\right] - \beta\underbrace{\left(\underline{\overline{\mu}} - \underline{\mu}^0 - \left(\underline{\tilde{\mu}}^q - \underline{\mu}^0\right)\underline{\underline{P}}\right)\underline{\underline{N}}\underline{E}_f^{tr}}_{:=a_f} \quad \forall f \tag{18}$$

Beim Übergang der ersten zur zweiten Zeile dieser Formel (18) handelt es sich lediglich um eine Umsortierung der Summanden in Anteile mit einem Faktor $\chi_e$ und in die restlichen Anteile. Sowohl $e$ als auch $j$ laufen von 1 bis $n_e$.

Bei Kombinationen der Unbekannten $\chi_e$ zu einem ( nur $n_e$-dimensionalen) Vektor $\underline{\chi}$ lässt sich diese Gleichung auch in der Form

$$x = \underline{a}\underline{\underline{B}}^{-1} \tag{19}$$

schreiben. Hierbei handelt es sich um ein lineares Gleichungssystem mit wenigen Unbekannten $\chi_e$, welches ohne weiteres lösbar ist. Zur Aufstellung dieses Gleichungssystems müssen lediglich die Matrix $\underline{\underline{B}}$ und der Vektor a bestimmt werden.

Bei der Bestimmung der Matrix $\underline{\underline{B}}$ werden in der praktischen Berechnung innerhalb des Terms ($\underline{E}_e\,\underline{\underline{N}}\,\underline{E}_f^{tr}$) sinnvollerweise nur die 100 bis 1000 am häufigsten gesehenen Dichten benutzt, um die Anzahl der floating-point-Operationen zu reduzieren. Dies ist ohne weiteres möglich, da ohnehin nach Formel (9) die Anzahl des Auftretens der einzelnen Dichten gezählt wird und daher eine Sortierung der Dichten nach Häufigkeit des Auftretens durchgeführt werden kann. Der mittlere Teil der Komponenten $a_f$ in Formel (18) braucht ebenfalls nur einmal berechnet zu werden und kann dann sowohl für Formel (18) als auch für den mittleren Summanden der Formel (16) benutzt werden. D.h. auch diese Berechnung erfolgt sinnvollerweise nur einmal und wird entsprechend im Rechner gespeichert.

Letztlich erlauben die Formeln (15), (16) und (19) die explizite Bestimmung der Parameter, welche die Beobachtungswahrscheinlichkeit unter Berücksichtigung der gegebenen asymmetrisch gauß-verteilten Sprechervariabilität maximieren. Ein Einsetzen der unteren Zeile von Formel (18) in Formel (19) und Einsetzen dieser Formel sowie der Formel (15) in Formel (16) führt zu folgender Gesamtformel:

$$
\begin{aligned}
\underline{\mu}^q &= \underline{\mu}^0 + \left[ \sum_i \left(1 - \frac{1}{1+\frac{\beta}{\alpha}N_i}\right)\left(\underline{\mu}_i - \underline{\mu}_i^0\right) \right]\left(\underline{1} - \sum_e \underline{E}_e^{tr}\,\underline{E}_e\right) + \sum_e \chi_e\,\underline{E}_e \\
&= \underline{\mu}^0 + \beta\left(\underline{\mu} - \underline{\mu}^0\right)\underline{\underline{N}}\left[\beta\underline{\underline{N}} + \alpha\underline{1}\right]^{-1}\left(\underline{1} - \underline{\underline{E}}^{tr}\,\underline{\underline{E}}\right) \\
&\quad + \beta\left(\underline{\mu} - \underline{\mu}^0\right)\underline{\underline{N}}\underline{\underline{E}}^{tr}\left[\beta\underline{\underline{E}}\underline{\underline{N}}\underline{\underline{E}}^{tr} + \underline{\underline{\varepsilon}}\right]^{-1}\underline{\underline{E}} \\
&\quad - \beta^2\left(\underline{\mu} - \underline{\mu}^0\right)\underline{\underline{N}}\left[\beta\underline{\underline{N}} + \alpha\underline{1}\right]^{-1}\left(\underline{1} - \underline{\underline{E}}^{tr}\,\underline{\underline{E}}\right)\underline{\underline{N}}\underline{\underline{E}}^{tr}\left[\beta\underline{\underline{E}}\underline{\underline{N}}\underline{\underline{E}}^{tr} + \underline{\underline{\varepsilon}}\right]^{-1}\underline{\underline{E}}
\end{aligned} \tag{20}
$$

Die erste Spalte von Formel (20) ist für praktische Anwendungen zur Berechnung der $\underline{\mu}^q$ geeignet. Es handelt sich hier um eine iterative Formel, mit der - jeweils ausgehend von einem Startmodell bzw. dessen Repräsentation als Supervektor $\underline{\mu}^0$ im Modellraum - pro Iterationsschritt ein neueres, dem Sprecher besser angenähertes Modell entwickelt wird, das durch den Supervektor $\underline{\mu}^q$ im Modellraum repräsentiert wird.

Die weiteren Zeilen in Formel (20) sind ohne Indizes geschrieben und gelten für willkürliche Sets von orthonormalen Vektoren $\{\underline{E}_e\}$. Die $n_E \times n_p$-Matrix $\underline{\underline{E}}$ enthält die Basisvektoren als Zeilen; die $n_E \times n_E$-Matrix $\underline{\underline{\varepsilon}}$ ist die inverse Kovarianzmatrix der Sprecher in diesem Unterraum ( welche nur in dem speziellen Koordinatensystem, das für Formel (20) gewählt wurde, diagonal ist). Ein Vergleich der Ausdrücke bei der zweiten Zeile von Formel (20), welche für die normale, übliche MAP-Lösung gilt, und der dritten und vierten Zeile von Formel (20) für die Eigenvoice-Modifikation zeigt ihre Analogie. In dem zweiten Fall findet eine Transformation auf die Unterraum-Basis $\underline{\underline{E}}$ statt und die Varianzmatrix $\alpha\underline{1}$ wird durch die Matrix $\underline{\underline{\varepsilon}}$ generalisiert.

In den obigen Herleitungen wurde davon ausgegangen, dass lediglich die Mittelwerte der Wahrscheinlichkeitsdichten im Merkmalsraum als Parameter verwendet werden. Selbstverständlich können auch zusätzliche Parameter, beispielsweise die Varianzen der Wahrscheinlichkeitsdichten, hinzugefügt werden. Außerdem ist es auch möglich, innerhalb der Gleichungen bestimmte Terme, die gegenüber anderen Termen sehr klein sind, letztlich zu vernachlässigen, um so den Rechenaufwand zu reduzieren.

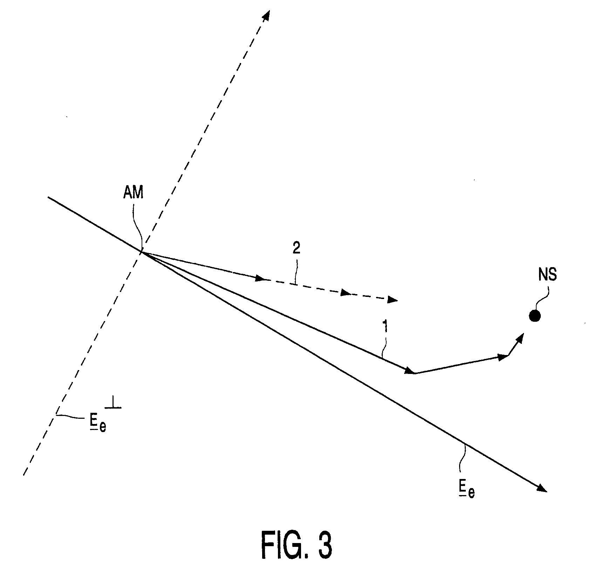

Figur 3 zeigt in einer einfachen Darstellung in nur einer Ebene die schrittweise Anpassung mittels des erfindungsgemäßen, verallgemeinerten MAP-Verfahrens (Kurve 1) im Verhältnis zu dem üblichen MAP-Verfahren ( Kurve 2). Angepasst wird hierbei jeweils das Ausgangsmodell AM an den tatsächlichen neuen Sprecher NS. Ausgangsmodell ist hierbei vorzugsweise das mittlere Sprechermodell aller Trainingssprecher, d.h. der Ursprung des erfindungsgemäß entwickelten Eigenraums. Wie deutlich zu sehen ist, erfolgt bei der Anpassung gemäß dem verallgemeinerten MAP-Verfahren 1 die Adaption in Richtung eines Eigenvektors $\underline{E}_e$ mit erheblich größerer Geschwindigkeit als in senkrecht zu diesem Eigenvektor $\underline{E}_e$ stehenden Richtungen $\underline{E}_e^{\perp}$. Bei dem herkömmlichen MAP-Verfahren erfolgt die Anpassung in beiden Richtungen mit isotroper Geschwindigkeit. Dies führt für das allgemeine MAP-Verfahren bei der gleichen Anzahl von Schritten zu einer erheblich schnelleren Annäherung an den tatsächlichen Sprecher NS.

Alternativ kann anstelle des mittleren Sprechermodells auch das gemeinsame sprecherunabhängige Modell der Trainingssprecher als Ausgangsmodell verwendet werden. Als weitere Alternative kann eine Linearkombination beider Modelle als Ausgangsmodell verwendet werden. Außerdem kann die Verbindungsachse zwischen dem mittleren Sprechermodell und dem gemeinsamen sprecherunabhängigen Modell als weitere, zusätzliche Vorzugsrichtung in der allgemeinen MAP-a priori-Verteilung verwendet werden. Bei den bisherigen Tests bei einer Anpassung eines Modells an einen neuen Sprecher unter Verwendung der gefundenen Eigenvektoren wurden jedoch bessere Ergebnisse erzielt, wenn als Ausgangsmodell der Mittelwert aller Supervektoren der einzelnen Sprecher gewählt wurde, als wenn als Ausgangsmodell der Supervektor des gemeinsamen sprecherunabhängigen Modells gewählt wurde.

Die erfindungsgemäße Methode wurde bereits erfolgreich für geschlechtsunabhängige und geschlechtsabhängige Modelle mit 27 000 oder 55 000 Dichten und 10 bzw. 50 Eigenvektoren angewandt. Eine Anpassung mit unbekannter Sprache führte zu einer 10- bis 16-prozentigen relativen Verbesserung der Wortfehlerrate nach einigen Sekunden Spracheingabe.

Bereits eine Sekunde ( oder nur zwei Wörter ) können zu einer Verringerung der Wortfehlerrate von fünf Prozent führen, wenn das in dem obigen Ausführungsbeispiel aufgezeigte erfindungsgemäße verallgemeinerte MAP-Verfahren unter Verwendung der Basisvektoren des aufgestellten Eigenraums verwendet wird.

## Patentansprüche

1. Verfahren zur Spracherkennung, bei dem ein Ausgangs-Modell-Set, welches Modelle für verschiedene akustische Einheiten umfasst, wobei die Modelle durch eine Mehrzahl von Modellparameter beschrieben werden, anhand bereits beobachteter Sprachdaten eines aktuellen Sprechers an diesen Sprecher angepasst wird,
**dadurch gekennzeichnet,**
**dass** das Ausgangs-Modell-Set durch einen Supervektor in einem hochdimensionalen Vektorraum (Modellraum) repräsentiert wird, wobei der Supervektor durch Verkettung der Mehrzahl der Modellparameter der Modelle des Ausgangs-Modell-Sets gebildet wird, und dieses Ausgangs-Modell-Set in dem Modellraum mittels eines MAP-Verfahrens an den Sprecher angepasst wird, wobei als a priori-Verteilung für das MAP-Verfahren eine asymmetrische Verteilung im Modellraum gewählt wird.

2. Verfahren nach Anspruch 1,
**dadurch gekennzeichnet,**
**dass** die a priori-Verteilung eine asymmetrische Gaußverteilung ist.

3. Verfahren nach Anspruch 1 oder 2,
**dadurch gekennzeichnet,**
**dass** die a priori-Verteilung so gewählt wird, dass eine Adaption in bestimmten Vorzugsrichtungen im Modellraum schneller verläuft als senkrecht zu diesen Vorzugsrichtungen.

4. Verfahren nach Anspruch 3,
**dadurch gekennzeichnet,**
**dass** die a priori-Verteilung in Richtung der Vorzugsrichtungen und senkrecht dazu unterschiedliche Varianzen aufweist.

5. Verfahren nach einem der vorstehenden Ansprüche,
**dadurch gekennzeichnet,**
**dass** die Vorzugsrichtungen so gewählt sind, dass sie die Hauptrichtungen innerhalb des Modellraums repräsentieren, entlang der sich unterschiedliche Sprecher voneinander unterscheiden lassen.

6. Verfahren nach Anspruch 5,
**dadurch gekennzeichnet,**
**dass** die Vorzugsrichtungen entlang von bestimmten Eigenraum-Basisvektoren ($\underline{E}_e$) eines Eigenraums verlaufen, welcher auf Basis von Trainingssprachdaten einer Mehrzahl von Trainingssprechern ermittelt wurde.

7. Verfahren nach Anspruch 6,
**dadurch gekennzeichnet,**
**dass** die Ermittlung des Eigenraums mit folgenden Schritten erfolgt:

- Entwicklung eines gemeinsamen sprecherunabhängigen Modell-Sets für die Trainingssprecher unter Verwendung der Trainingssprachdaten der Trainingssprecher,
- Adaption des sprecherunabhängigen Modell-Sets an die einzelnen Trainingssprecher zur Entwicklung der sprecherabhängigen Modell-Sets unter Verwendung der jeweiligen Trainingssprachdaten der einzelnen Trainingssprecher,
- Erfassung der Zuordnung der Modellparameter der Modelle (SI) des sprecherunabhängigen Modell-Sets zu den Modellparametern der Modelle (SD) der sprecherabhängigen Modell-Sets bei der Adaption des sprecherunabhängigen Modell-Sets an die einzelnen Trainingssprecher,
- Abbildung eines kombinierten Modells für jeden Sprecher in einem hochdimensionalen Vektorraum durch Verkettung einer Mehrzahl der Modellparameter der Modelle der Modell-Sets der einzelnen Trainingssprecher zu jeweils einem zusammenhängenden Supervektor, wobei die Verkettung der Mehrzahl Modellparameter der einzelnen Modell-Sets zu den Supervektoren derart erfolgt, dass die Modellparameter der Modelle (SD) der sprecherabhängigen Modell-Sets, die denselben Modellparametern desselben Modells (SI) des sprecherunabhängigen Modell-Sets zugeordnet sind, an den entsprechenden Positionen der jeweiligen Supervektoren angeordnet werden,
- Durchführung eines Basiswechsels zur Reduzierung des Modellraums auf einen Sprecher-Unterraum, in dem alle Trainingssprecher repräsentiert sind,
- Durchführung einer Transformation auf den die Trainingssprecher im Sprecher-Unterraum repräsentierenden Vektoren zur Gewinnung von Eigenraum-Basisvektoren ($\underline{E}_e$), wobei die Transformation ein auf der Variabilität der zu transformierenden Vektoren basierendes Reduktionskriterium nutzt.

8. Verfahren nach Anspruch 7,
   **dadurch gekennzeichnet,**
   **dass** die Basis dieses Sprecher-Unterraum von orthogonalisierten Differenzvektoren der Supervektoren der einzelnen Trainingssprecher zu einem mittleren Supervektor aufgespannt wird.

9. Verfahren nach einem der Ansprüche 1 bis 8,
   **dadurch gekennzeichnet,**
   **dass** als Ausgangs-Modell-Set ein mittleres Modell-Set von sprecherabhängigen Modell-Sets der Trainingssprecher verwendet wird.

10. Verfahren nach einem der Ansprüche 6 bis 9,
    **dadurch gekennzeichnet,**
    **dass** für die Eigenraum-Basisvektoren ($\underline{E}_e$) zugehörige Ordnungsmerkmale ermittelt werden.

11. Verfahren nach Anspruch 9 oder 10,
    **dadurch gekennzeichnet,**
    **dass** die Eigenraum-Basisvektoren die Eigenvektoren einer mittels der Supervektoren ermittelten Korrelationsmatrix und die Ordnungsmerkmale die zu den Eigenvektoren gehörigen Eigenwerte sind.

12. Computerprogramm mit Programmcode-Mitteln, um alle Schritte eines Verfahrens nach einem der vorstehenden Ansprüche auszuführen, wenn das Programm auf einem Computer ausgeführt wird.

13. Computerprogramm mit Programmcode-Mitteln gemäß Anspruch 12, die auf einem computerlesbaren Datenträger abgespeichert sind.

FIG. 1

FIG. 2

FIG. 3